# EUROPÄISCHE PATENTANMELDUNG

(11) **EP 2 243 519 A1**
(43) Veröffentlichungstag der Anmeldung: **27.10.2010**
(21) Anmeldenummer: 10450063.2
(22) Anmeldetag: 22.04.2010
(51) Int. Cl.: A62B 35/04, F16G 11/14, A62B 1/14

(54) **Absturzsicherung**

(30) Priorität: 24.04.2009 AT 6292009
(71) Anmelder: Innotech Holding GmbH, 4694 Ohlsdorf (AT)
(72) Erfinder: Reiter, Gerald, 4694 Ohlsdorf (AT)
(74) Vertreter: Hübscher, Helmut

(57) **Zusammenfassung**

Es wird eine Absturzsicherung mit einem eine Seilschlaufe bildenden Sicherungsseil (1) und einer das Abziehen des Sicherungsseils (1) aus der Seilschlaufe bremsenden Seilklemme (6) für die nebeneinanderliegenden Enden der zu einer ringförmigen Seilschlinge (5) gebogenen Seilschlaufe beschrieben. Um vorteilhafte Bremsbedingungen zu schaffen, wird vorgeschlagen, dass die Seilklemme (6) aus zwei Klemmbacken (7, 8) zusammengesetzt ist, die zwischen sich je eine Klemmaufnahme (9) für die Enden der Seilschlinge (5) des als Stahlseil ausgebildeten Sicherungsseils (1) bilden, dass die Teilungsfläche der Klemmbacken (7, 8) zwischen den beiden Klemmaufnahmen (9) verläuft und dass zwischen den beiden Klemmbacken (7, 8) eine die beiden Enden der Seilschlinge (5) voneinander trennende Reibplatte (11) vorgesehen ist.

## Beschreibung

Die Erfindung bezieht sich auf eine Absturzsicherung mit einem eine Seilschlaufe bildenden Sicherungsseil und einer das Abziehen des Sicherungsseils aus der Seilschlaufe bremsenden Seilklemme für die nebeneinanderliegenden Enden der zu einer ringförmigen Seilschlinge gebogenen Seilschlaufe.

Zum stoßdämpfenden Abfangen eines Sturzes sind Absturzsicherungen mit einer Fallbremse bekannt (DE 75 07 128 U1), die das Abziehen eines Sicherungsseils aus einem Seilspeicher bremst und dabei einen Teil der Fallenergie aufnimmt. Das Sicherungsseil wird dabei zum Aufbringen ausreichender Reibkräfte innerhalb eines Seilkanals schlingenbildend um eine Umlenkführung geführt, wobei über einen quer zum Seilkanal verstellbaren Klemmkörper eine zusätzliche Bremskraft auf das Sicherungsseil ausgeübt werden kann. Nachteilig bei dieser und anderen Fallbremsen ist vor allem der aufwendige Aufbau.

Um den Konstruktionsaufwand von mit solchen Fallbremsen ausgestatteten Absturzsicherungen zu vermeiden, wurde bereits vorgeschlagen, das Sicherungsseil unter Ausbildung einer Seilschlaufe anzuschlagen und das ablaufende Ende der Seilschlaufe durch eine eine Seilbremse bildende Seilklemme zu führen. Es hat sich jedoch gezeigt, dass die Gefahr besteht, dass im Falle eines Sturzes das durch die Klemmaufnahme der Seilklemme laufende Sicherungsseil die Klemmaufnahme unter einem entsprechenden Verschleiß ausreibt, sodass die Bremskraft bei einer sturzbedingten Verkürzung der Seilschlaufe zunehmend abnimmt.

Zum Sichern insbesondere eines Kletterers ist es darüber hinaus bekannt (FR 2 382 241 A1, FR 2 851 924 A1), Seilbremsen zum Abziehen eines biegeweichen Seils in Form einer die beiden Enden des eine ringförmige Seilschlinge bildenden Seils mit einer Klemmhülse zu umschließen, sodass das Seil aus der Seilschlinge nur unter Überwindung der Reibkräfte zwischen den beiden Enden der Seilschlinge und zwischen der Klemmhülse und den Seilschlingenenden abgezogen werden kann, was wiederum die Gefahr mit sich bringt, dass die Bremskraft verschleißbedingt nachlässt.

Schließlich ist es bekannt (US 4 531 610 A), die beiden Enden einer in einem Gehäuse geführten Seilschlaufe voneinander getrennt über je eine Seilbremse aus dem Gehäuse zu führen. Die Anordnung ist dabei so getroffen, dass die beiden Seilbremsen schwenkbar gelagerte Klemmbacken aufweisen, die das jeweilige Schlaufenende des Seils gegen eine gemeinsame Zwischenwand drücken, um eine entsprechende Bremsreibung zu erhalten, wobei mit zunehmender Zugbelastung des Seils das die Klemmkraft bewirkende Drehmoment auf die Klemmbacken vergrößert wird. Nachteilig bei dieser bekannten Seilbremse ist wiederum der durch die beiden Schwenkbacken bedingte Konstruktionsaufwand.

Der Erfindung liegt somit die Aufgabe zugrunde, eine Absturzsicherung der eingangs geschilderten Art so auszugestalten, dass trotz eines einfachen Aufbaus im Falle eines Sturzes die auftretenden Belastungen weitgehend stoßfrei aufgefangen und abgetragen werden können.

Die Erfindung löst die gestellte Aufgabe dadurch, dass die Seilklemme aus zwei Klemmbacken zusammengesetzt ist, die zwischen sich je eine Klemmaufnahme für die Enden der Seilschlinge des als Stahlseil ausgebildeten Sicherungsseils bilden, dass die Teilungsfläche der Klemmbacken zwischen den beiden Klemmaufnahmen verläuft und dass zwischen den beiden Klemmbacken eine die beiden Enden der Seilschlinge voneinander trennende Reibplatte vorgesehen ist.

Durch diese Maßnahmen gelingt es in überraschender Weise, eine ausreichend hohe Bremsreibung über die gesamte Auszugslänge der Seilschlaufe aufrecht zu erhalten, weil aufgrund des Einsatzes eines Stahlseils und des ringförmigen Verlaufs der zu einer Seilschlinge gebogenen Seilschlaufe deren Enden unter einem Biegemoment in die Klemmaufnahmen eingreifen, das vom jeweiligen Durchmesser der Seilschlinge abhängt. Da sich somit dieses Biegemoment mit einem zunehmenden Zusammenziehen der Seilschlinge und einer damit verbundenen Verkleinerung des Schlingendurchmessers zunehmend vergrößert, kann aufgrund der mit dem Zusammenziehen der Seilschlinge größer werdenden Ablenkung der aus den Klemmaufnahmen austretenden Enden der Seilschlinge selbst bei einem Verschleiß der Klemmaufnahmen eine ausreichende Reibung aufrecht erhalten und damit das Sicherungsseil durch die Seilklemme zur Dämpfung der stoßartigen Fallbelastung gebremst werden.

Da beim Aneinanderdrücken der gegensinnig aus der Seilklemme abgezogenen Schlingenenden die Gefahr besteht, dass die aneinanderliegenden Schlingenenden miteinander verschweißen, was selbstverständlich zu unterbinden ist, ist zwischen den beiden Klemmbacken der Seilklemme eine die beiden Enden der Seilschlinge voneinander trennende Reibplatte vorgesehen. Die Seilklemme umfasst zu diesem Zweck zwei Klemmbacken, die zwischen sich die Klemmaufnahmen bilden, wobei die Teilungsfläche der Klemmbacken zwischen den Klemmaufnahmen verläuft, sodass die in den Klemmaufnahmen geführten Seilabschnitte nicht nur an die beiden Klemmbacken, sondern auch an die zwischen ihnen angeordnete Reibplatte angedrückt werden.

In der Zeichnung ist der Erfindungsgegenstand beispielsweise dargestellt. Es zeigen
- Fig. 1: eine erfindungsgemäße Absturzsicherung ausschnittsweise im Bereich einer bremsenden Seilklemme in einer schematischen Seitenansicht,
- Fig. 2: die Seilklemme in einem Schnitt nach der Linie II-II der Fig. 1 in einem größeren Maßstab und
- Fig. 3: einen Schnitt nach der Linie III-III der Fig. 2 ebenfalls in einem größeren Maßstab.

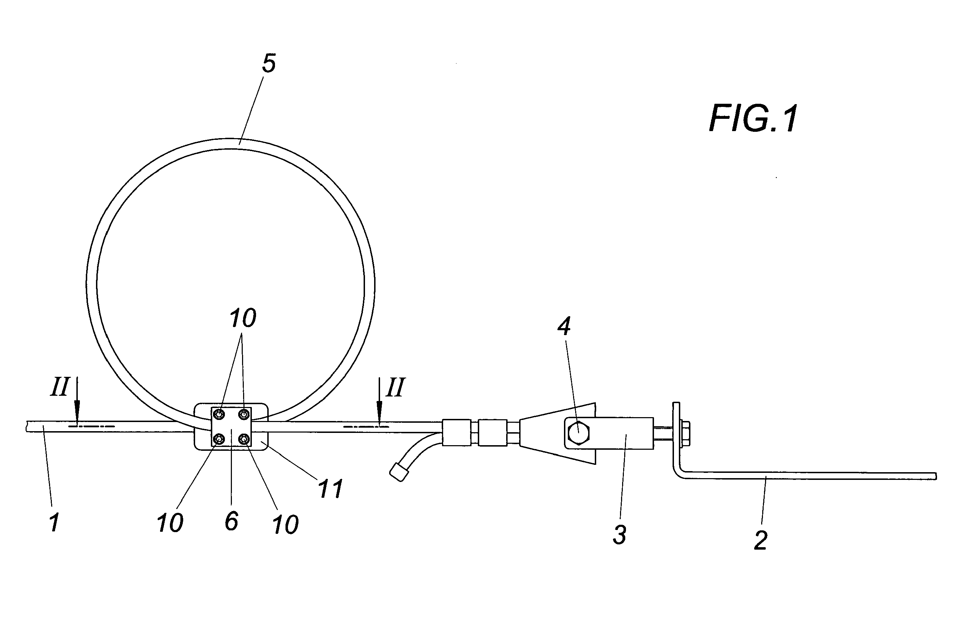

Gemäß der Fig. 1 wird das durch ein Stahlseil gebildete Sicherungsseil 1 als Führungsseil einer Absturzsicherung eingesetzt, wobei die persönliche Schutzausrüstung am Sicherungsseil 1 angeschlagen wird, das zwischen endseitigen Befestigungslaschen 2 gespannt ist, und zwar mit Hilfe von Bügeln 3, in denen eine Seilkausche durchsetzende Anschlagbolzen 4 gehalten sind. Das Sicherungsseil 1 könnte aber auch als Anschlagseil für eine persönliche Schutzausrüstung dienen.

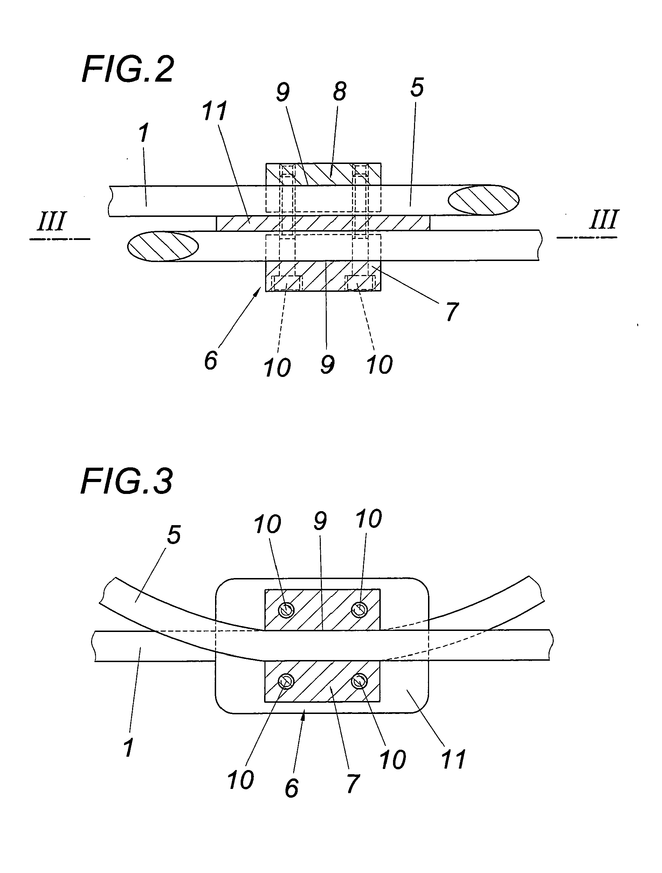

Um stoßartige Belastungen im Falle eines Sturzes zu vermeiden, ist das Sicherungsseil 1 zu einer ringförmigen Seilschlinge 5 gebogen, deren Enden mit Hilfe einer Seilklemme 6 festgehalten werden. Diese Seilklemme 6 setzt sich aus zwei Klemmbacken 7 und 8 zusammen, die zwischen sich Klemmaufnahmen 9 für die nebeneinander zu liegen kommenden Enden der Seilschlinge 5 bilden und mit Hilfe von Klemmschrauben 10 gegeneinander verspannt werden können. Da die Teilungsfläche zwischen den beiden Klemmbacken 7 und 8 zwischen den beiden Klemmaufnahmen 9 verläuft, wie dies der Fig. 2 entnommen werden kann, würden beim Anziehen der Klemmschrauben 10 die Enden der Seilschlinge 5 nicht nur in die Klemmaufnahmen 9 der beiden Klemmbacken 7 und 8, sondern auch gegeneinander gepresst werden, was unter Umständen im Fall eines Sturzes aufgrund der auftretenden Reibungswärme zu einem Verschweißen der Seilenden führen kann. Um ein Verschweißen der Schlingenenden sicher auszuschließen, ist zwischen den Klemmbacken 7 und 8 eine Reibplatte 11 vorgesehen, die zwischen die durch die Klemmaufnahmen 9 laufenden Seilabschnitte ragt und die Enden der Seilschlinge 5 voneinander trennt, sodass keine Berührung der nebeneinander durch die Seilklemme 6 laufenden Seilabschnitte gegeben ist. Der für die Reibplatte 11 vorgesehene Werkstoff schließt ja ein solches Verschweißen aus.

Wie sich aus den Fig. 1 und 3 ergibt, sind die Enden der Seilschlinge 5 in den Klemmaufnahmen 9 der Seilklemme 6 so eingespannt, dass die Klemmbacken 7, 8 über die Klemmaufnahmen 9 ein Biegemoment der Schlingenenden zufolge der Seilbiegung aufnehmen müssen. Dieses vom Durchmesser der Seilschlinge 5 und von der Biegesteifigkeit des Sicherungsseils 1 abhängige Biegemoment wächst beim Zusammenziehen der Seilschlinge 5 an, was einen erhöhten Druck der Schlingenenden auf die Klemmaufnahmen 9 mit sich bringt, und zwar insbesondere im Bereich der Stirnseiten der Klemmaufnahmen 9. Beim Auftreten eines Sturzes wird das Sicherungsseil 1 einer entsprechenden stoßartigen Zugbelastung unterworfen, die ein Gleiten der Enden der Seilschlinge 5 in den Klemmaufnahmen 9 der Seilklemme 6 und damit eine gebremste Verlängerung der wirksamen Seillänge bewirkt. Die auftretende Reibung zwischen dem als Stahlseil ausgebildeten Sicherungsseil 1 und der Seilklemme 6, vorzugsweise aus einem Aluminiumwerkstoff, kann zu einem Abrieb im Bereich der Klemmaufnahme 9 führen. Dieser Verschleiß bedingt bei herkömmlichen Seilklemmen, bei denen das zu bremsende Seil koaxial zur Klemmaufnahme 9 verläuft, eine Verringerung der Reibung und damit der wirksamen Bremskräfte. Da erfindungsgemäß die Seilklemme 6 nebeneinanderliegende Klemmaufnahmen 9 für die Enden einer zu einer ringförmigen Seilschlinge 5 gebogenen Seilschlaufe aufweist, wird die Andrückkraft der Schlingenenden an die Klemmaufnahmen 9 mit kleiner werdendem Schlingendurchmesser vergrößert, was einen allfälligen Verschleiß ausgleicht, sodass trotz eines solchen Verschleißes ausreichende Bremskräfte sichergestellt werden können, um einen stoßartigen Fall wirksam zu dämpfen.

## Patentansprüche

1. Absturzsicherung mit einem eine Seilschlaufe bildenden Sicherungsseil (1) und einer das Abziehen des Sicherungsseils (1) aus der Seilschlaufe bremsenden Seilklemme (6) für die nebeneinanderliegenden Enden der zu einer ringförmigen Seilschlinge (5) gebogenen Seilschlaufe, **dadurch gekennzeichnet, dass** die Seilklemme (6) aus zwei Klemmbacken (7, 8) zusammengesetzt ist, die zwischen sich je eine Klemmaufnahme (9) für die Enden der Seilschlinge (5) des als Stahlseil ausgebildeten Sicherungsseils (1) bilden, dass die Teilungsfläche der Klemmbacken (7, 8) zwischen den beiden Klemmaufnahmen (9) verläuft und dass zwischen den beiden Klemmbacken (7, 8) eine die beiden Enden der Seilschlinge (5) voneinander trennende Reibplatte (11) vorgesehen ist.
